(19) Europäisches Patentamt / European Patent Office / Office européen des brevets

(11) **EP 4 137 996 A1**

(12) **EUROPEAN PATENT APPLICATION**

(43) Date of publication:
**22.02.2023 Bulletin 2023/08**

(21) Application number: **21192100.2**

(22) Date of filing: **19.08.2021**

(51) International Patent Classification (IPC):
**G06N 3/04** (2006.01)    **G06N 3/08** (2006.01)

(52) Cooperative Patent Classification (CPC):
**G06N 3/082; G06N 3/045**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Continental Autonomous Mobility Germany GmbH**
**85057 Ingolstadt (DE)**

(72) Inventor: **Utasi, Akos**
**90411 Nürnberg (DE)**

(74) Representative: **Continental Corporation**
**c/o Continental Automotive GmbH**
**Intellectual Property**
**Nordostpark 30**
**90411 Nürnberg (DE)**

(54) **METHOD FOR TRAINING A NEURAL NETWORK**

(57)    The invention relates to a method for training an artificial neural network (1), the neural network (1) comprising a backbone portion (2) and an head portion (3), wherein at least one layer of the neural network (1) is expanded in order to improve training results.

Fig. 1

## Description

The present invention relates generally to the field of artificial neural networks. More specifically, the invention relates to a method for training a neural network by expanding one or more layers in order to enhance training procedure.

Deep learning and convolutional neural networks are currently the state-of-the-art machine learning solutions for various visual tasks, such as image recognition, object detection, semantic and instance segmentation etc. Specifically in automotive applications, embedded hardware is used for processing the neural network. In embedded systems, the structure of neural networks is limited by the memory and the available operations supported by the chip. This means that compact and simple network structures are favored in such applications. However, in practice, training of such compact networks is difficult for gradient descent-based optimization techniques because compact networks often lead to fragile training results.

It is an objective of the embodiments of the invention to disclose a method for training a neural network which is robust in training and provides a trained neural network which can be deployed on limited computational resources, e.g. in embedded hardware.

The objective is solved by the features of the independent claims. Preferred embodiments are given in the dependent claims. If not explicitly indicated otherwise, embodiments of the invention can be freely combined with each other.

According to an aspect, the invention refers to a method for training an artificial neural network. First, a neural network with a backbone portion and a head portion is provided. The backbone portion may comprise, for example, a ResNet-structure. The backbone portion may be untrained or pretrained. The pretrained state may be obtained by loading predetermined weights and applying the weights to the respective layers of the backbone portion. In untrained case of the backbone portion, the training process of backbone portion may start with randomly initialized weights from the scratch. The head portion may be a task-specific head, i.e. configured for the respective task to be processed by the neural network.

According to a first expansion strategy, the method comprises the following further steps:

At least one layer of the backbone portion and/or the head portion is expanded by applying the input information provided to the respective layer to multiple filter kernels in order to transform the input information based on said multiple filter kernels, thereby obtaining a plurality of output information and summing said plurality of output information in order to obtain a final output information of the layer. So, in other words, instead of providing the input information to a single filter kernel of the layer, the input information is applied in parallel to multiple filter kernels and the output of said multiple filter kernels is summed-up in order to obtain final output information of the layer.

After training the expanded neural network, a trained neural network is provided in which the at least one layer which has been expanded during training is contracted and operated based on a summation kernel which is obtained by summing up said multiple filter kernels used during the training.

According to a second expansion strategy, the method comprises the steps of:

In the second expansion strategy, the backbone portion is pretrained. The pretrained state may be obtained by loading predetermined weights and applying the weights to the respective layers of the backbone portion. The head portion may be untrained, i.e. may start the training process with randomly initialized weights from the scratch.

The pretrained backbone portion is kept unexpanded and at least one layer of the head portion is expanded by replacing a filter kernel of the at least one layer by a set of multiple kernels. The set of multiple kernels comprises a first pointwise convolution kernel, a filter kernel and a second pointwise convolution kernel. The number of channels of the at least one layer of the head portion is linearly expanded by the first pointwise convolution, the output information of the first pointwise convolution kernel is provided to the filter kernel and the number of channels of the output of the filter kernel of the at least one layer is reduced by the second pointwise convolution. After training, a trained neural network is provided in which the at least one layer which has been expanded during training is contracted and operated based on a final filter kernel which is obtained by multiplying the first pointwise convolution kernel, the filter kernel and the second pointwise convolution kernel.

The proposed training method is advantageous because due to the expansion of one or more layers of the neural network, the size of the neural network can be increased for training purposes in order to improve the training results because training of neural networks comprising a greater size is more robust against fragile training than compact neural networks. However, due to contracting the expanded layers after training, in production, a compact neural network can be used which can be run on embedded hardware of a vehicle. The provided method is preferably used for training neural networks which process image information of a camera, a radar sensor, a lidar sensor etc. in automotive applications.

According to an embodiment, in the first expansion strategy, all layers in the backbone portion and all layers in the head portion are expanded. Using a linear ensemble of layers provides the advantage, that expansion is also possible when using pretrained weights of the backbone portion because the used distributive property of matrix multiplication allows the use of a pretrained backbone portion without modifying the structure of the layer but the used pretrained weights are simply duplicated into each additional layer used in the ensemble of layers.

According to an embodiment, in the first expansion strategy, all filter kernels used in the respective layer have the same size and the same structure. So, in other words, all filter kernels of the linear ensemble of filter kernels comprise the same structure and size. Thereby, the filter kernels can be easily contracted using distributive property of matrix multiplication.

According to an embodiment, in the first expansion strategy, the transformation of input information based on said multiple filter kernels is obtained by a convolutional operation and the multiple convolutions to be processed in the at least one layer are performed based on grouped convolution operation provided by the training framework. Using grouped convolution operations allows for calculating the convolutions of the linear ensemble of filter kernels with reduced computational effort.

According to an embodiment, in the second expansion strategy, all layers of the head portion are expanded by the same ratio, thereby increasing the number of channels in the respective layers of the head portion by the same factor.

According to an embodiment, in the second expansion strategy, the layers of the head portion are expanded by different ratios thereby increasing the number of channels in the respective layers of the head portion by different factors.

According to an embodiment, the expansion ratio of the respective layers of the head portion are precalculated by an optimization routine. Thereby the expansion of the layers of the head portion can be chosen such that the performance of the trained network is improved by choosing suitable expansion ratios for the layers to be expanded because the training result depends on the chosen expansion ratios of the layers.

According to an embodiment, only the last layer of the head portion is expanded. In case of limited hardware resources, the expansion ratio of the last layer (also referred to as output layer) can be chosen very high because the other layers remain lean.

The term "vehicle" as used in the present disclosure may refer to a car, truck, bus, train or any other crafts.

The term "essentially" or "approximately" as used in the invention means deviations from the exact value by +/- 10%, preferably by +/- 5% and/or deviations in the form of changes that are insignificant for the function and/or for the traffic laws.

The various aspects of the invention, including its particular features and advantages, will be readily understood from the following detailed description and the accompanying drawings, in which:

Fig. 1 schematically illustrates an example structure of a neural network to be trained comprising a backbone portion and a head portion, the backbone portion and the head portion comprising multiple layers;

Fig. 2 shows a schematic block diagram illustrating the steps of a method for training a neural network based on a first expansion strategy;

Fig. 3 schematically illustrates an example structure of a neural network which has been expanded based on the first expansion strategy;

Fig. 4 schematically illustrates the structure of the neural network of Fig. 3 after contracting the layers;

Fig. 5 shows a schematic block diagram illustrating the steps of a method for training a neural network based on a second expansion strategy;

Fig. 6 schematically illustrates an example structure of a neural network which has been expanded based on the second expansion strategy; and

Fig. 7 schematically illustrates the structure of the neural network of Fig. 6 after contracting the layers.

The present invention will now be described more fully with reference to the accompanying drawings, in which example embodiments are shown. The embodiments in the figures may relate to preferred embodiments, while all elements and features described in connection with embodiments may be used, as far as appropriate, in combination with any other embodiment and feature as discussed herein, in particular related to any other embodiment discussed further above. However, this invention should not be construed as limited to the embodiments set forth herein. Throughout the following description similar reference numerals have been used to denote similar elements, parts, items or features, when applicable.

The features of the present invention disclosed in the specification, the claims, examples and/or the figures may both separately and in any combination thereof be material for realizing the invention in various forms thereof.

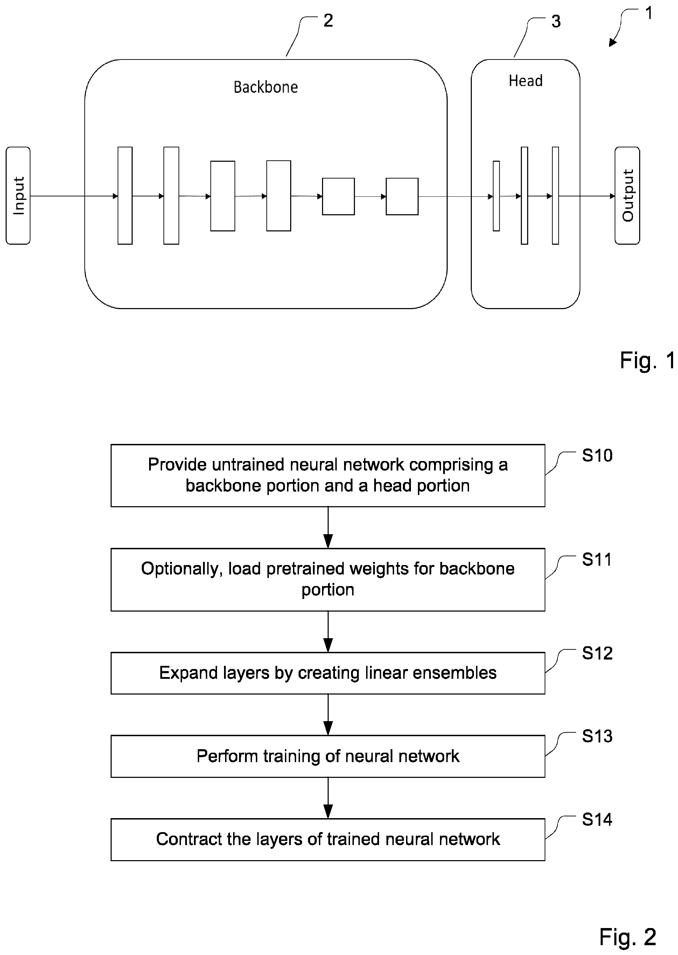

Fig. 1 shows a block diagram of a neural network 1. The neural network 1 comprises a backbone portion 2 and a head portion 3. The backbone portion 2 may comprise, for example ResNet-structure in order to process image information. The head portion 3 may be a task-specific portion which is configured for the respective task to be performed by the neural network 1.

In the following, different expansion schemes are disclosed which can be applied to compact neural network architectures in order to artificially increase its size for training the neural network. The disclosed expansion schemes are chosen such that after finishing the training, the neural network can be contracted into its original size in order to be able to execute the neural network on limited hardware resources, like embedded hardware in a vehicle. Therefore, the training improvement and neural network improvement comes for free, i.e. without requiring additional hardware resources when executing the trained neural network.

Fig. 2 to Fig. 4 refer to a first expansion scheme which uses the distributive property of matrix multiplication by replacing a single matrix or kernel of a convolutional, fully-connected or other linear layers of the neural network 1 by a linear ensemble of multiple matrixes or kernels during training. Since the kernel of a convolutional or fully-connected filter can be written in a matrix form, the terms "matrix", respectively, "kernel" of a filter will be used synonymously / interchangeably. In other words, a single matrix or kernel of one or more layers is replaced by a linear ensemble of multiple matrixes or kernels which receive the same input information, wherein each matrix or kernel of the linear ensemble processes the input information thereby obtaining multiple output information and summing the output information up in order to obtain final output information of the respective layer. The layers involve matrix multiplications to transform the input information to output information. The first expansion scheme makes use of the distributive property of matrix multiplication to create an ensemble of multiple matrixes during training. After finishing the training, the linear ensemble can be contracted back into a single matrix. Assuming that X is the input and an ensemble of matrixes A and B, the contraction is obtained by adding matrixes A and B to matrix C:

$$A*X + B*X = (A + B)*X = C*X.$$

Fig. 2 illustrates a flow diagram illustrating the steps of a training method using first expansion scheme.

First, an untrained neural network is provided which comprises a backbone portion 2 and a head portion 3 (S10).

As a next step, pretrained weights may be loaded which are applied to the backbone portion 2 (S11). Thereby, the training time of the whole neural network can be reduced. However, the training can also be started with an untrained backbone portion.

In the following, one or more layers of the backbone portion 2 and/or the head portion 3 are expanded. Preferably, at least some of the layers of the backbone portion 2 and the head portion 3 are expanded. Most preferably, all layers of the backbone portion 2 and the head portion 3 are expanded. Due to the expansion, the complexity of the neural network 1 is artificially increased thereby enhancing the training process of the neural network training.

After performing the training (S13), the expanded layers are contracted back into a single matrix, thereby reducing the complexity of neural network and obtaining a compact neural network 1 which can be executed with limited hardware ressources.

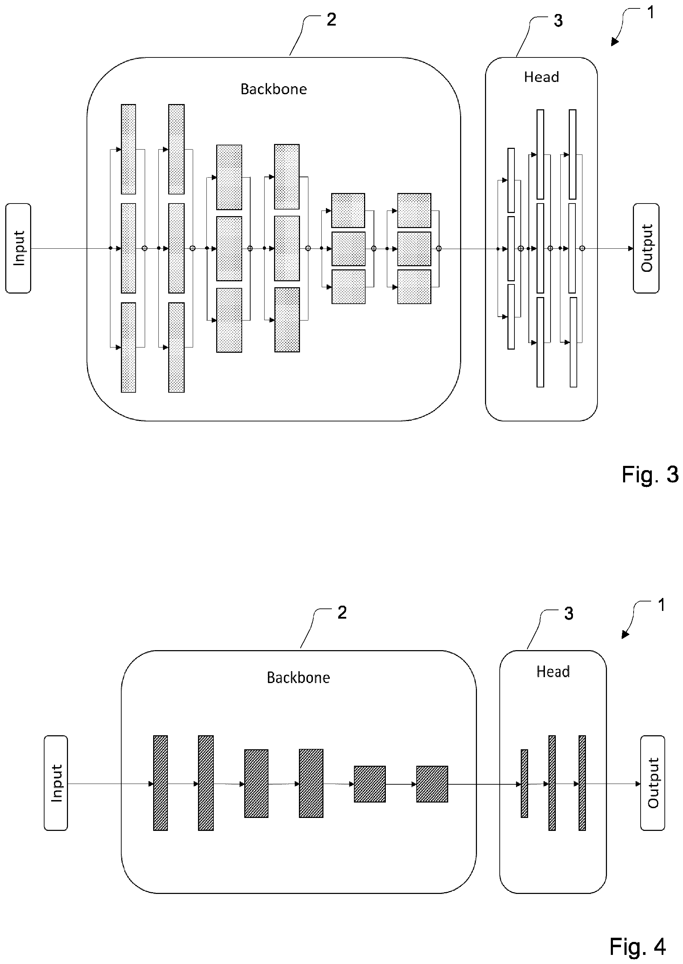

Fig. 3 shows the neural network according to Fig. 1 in which all layers in the backbone portion 2 and the head portion 3 has been expanded.

In the present embodiment, the expansion of each layer uses three matrixes, also referred to as kernels, instead of a single matrix, respective kernel. However, the expansion of layers can also use another expansion rate, e.g. two matrixes, four matrixes, five matrixes or even more. In addition, the expansion rates of the layers can be different.

It is worth mentioning that the linear ensemble of matrixes in one layer have to be configured such that after training the matrix summation can be performed. Therefore, the matrixes must have the same size and the same structure. However, the sizes and structures of matrixes can be different in different layers.

As can be seen in Fig. 3, the input provided to the first expanded layer is provided to each matrix of the linear ensemble in order to transform the input at each matrix and obtain multiple output information. Said output information is summed up in order to obtain final output information of the expanded layer. The final output information of the layer is provided to the next layer as input information. If the next layer is also an expanded layer, the same processing is repeated.

The expanded neural network comprises more weights than the non-expanded neural network. Thereby the expense for training the expanded neural network is increased, however a very robust training process which provides acceptable training results is achieved.

Using upper-mentioned distributive property of matrix multiplication, the expanded layers can be contracted, thereby resulting in a networks structure as shown in Fig. 4. As mentioned before, the contraction is performed by summing up the matrixes or kernels of the linear ensemble of the respective expanded layer.

Assuming a convolutional neural network 1 comprising an expanded layer with three kernels A, B, C wherein each kernel may be a matrix with dimension K, i.e. K x K, the input information may be transformed by each kernel A, B, C to an output information $out_A$, $out_B$, outc. The final output of the expanded layer may be $out_{final} = out_A + out_B + out_C$. After training, the contracted kernel is obtained by summing up the kernels A, B, C, i.e. A+B+C.

During training, the linear ensemble of multiple matrixes in one expanded layer can be processed by grouped convolution operation, which is often provided by training frameworks. Thereby, computational effort can be reduced.

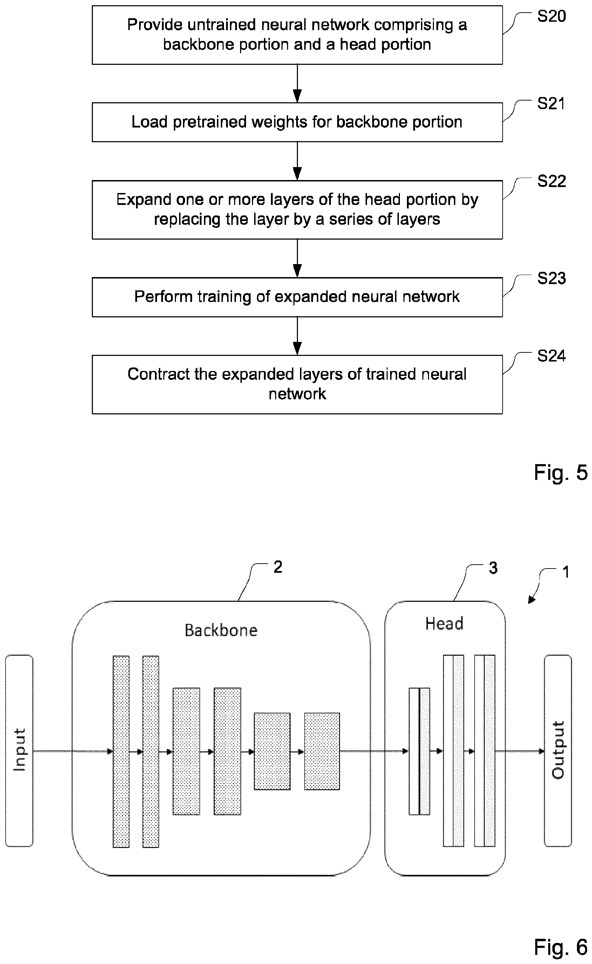

Based on Fig. 5 to Fig. 7, a second expansion scheme is described in closer detail which uses the associative property of matrix multiplication by replacing one or more convolutional, fully-connected or other linear layers of the head of the neural network 1 by a series of layers, i.e. linearly expanding the head portion by using multiple layers instead of a single layer. Assuming that X is the input which is multiplied with a first matrix A and the output of the multiplication is further multiplied with matrix B, using associative property of matrix multiplication, the same result can be obtained by first multiplying matrixes A and B and multiplying the output of said multiplication with input X:

$$(A*X)*B = (A * B)*X.$$

The associative property of matrix multiplication is used in the second expansion scheme, wherein the neural network may be trained as follows:

After providing an untrained neural network comprising a backbone portion 2 and a head portion 3 (S20), pretrained weights are loaded into the backbone portion (S21). Thereby, a pretrained backbone can be used so that training resources can be focussed on the task-specific head portion 3 which improves the training process.

Afterwards, one or more layers of the head portion 3 are replaced by a series of multiple layers (S22). Thereby, the head portion 3 is artificially increased in order to obtain a larger head portion which provides higher training stability.

After expanding the head portion 3, the expanded neural network is trained (S23). More in detail, the neural network comprising the pretrained backbone and the expanded head portion as shown in Fig. 6 is trained.

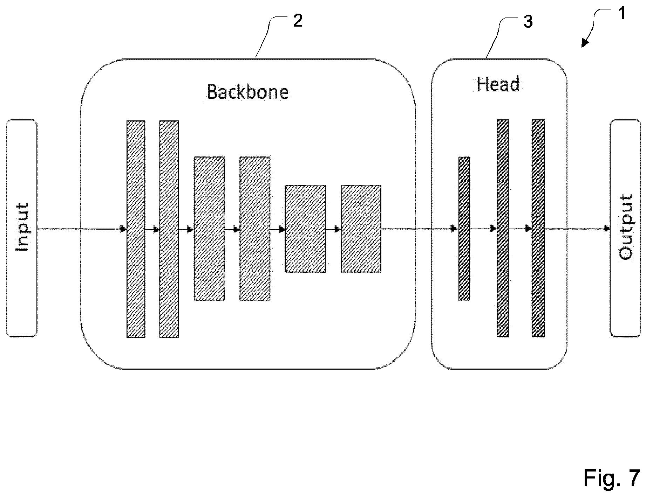

After finishing training, the expanded head portion is contracted back, as shown in Fig. 7, into the original compact network structure in order to be able to process the trained neural network on limited hardware resources (S24).

More in detail, the linear expansion may be implemented as follows: First, a first point-wise convolution (also referred to as 1x1-convolution) is applied to the input information of the respective layer in order to expand the input channels by a given factor. For example, the expansion rate may be in the range of 8 to 64. After increasing the number of input channels, the target convolution is applied to the output of the first point-wise convolution layer, i.e. the expanded input information is treated with the target convolution. Finally, the output information derived from the target convolution is compressed or contracted by means of a second point-wise convolution (1x1-convolution).

More in detail, given a target convolution layer with N input, and M output channels, the first step of expansion results in r*N channels where r is the expansion rate (e.g. r=2, r=4, r=8, r=16, r=32, r=64 etc.). In the second step, the target convolution is applied on this expanded input and results in r*M output channels. Finally, in the last step, the r*M output channels are compressed into M final output channels of the layer. Since these three steps are a linear composition of matrix multiplications, they can be contracted after the training process into a single convolution layer of N input and M output channels.

Let Cin x kxk x Cout be the original convolutional layer with Cin as the number of input channels, Cin as the number of output channels and kxk the convolution kernel, wherein k=3, for example (i.e. 3x3-kernel). The linear expansion of a layer of the head portion 3 can be obtained based on the following kernels:

- Cin x 1x1 x rCin, wherein Cin is the number of input channels, r is the expansion rate and 1x1 is the point-wise convolution;
- rCin x kxk x rCout, wherein Cin is the number of input channels, kxk is the convolution kernel or the original layer and $C_{out}$ is the number of output channels;
- $rC_{out}$ x 1x1 x Cout, wherein Cout is the number of output channels, r is the expansion rate and 1x1 is the point-wise convolution.

Due to the fact that a convolutional operation can be expressed as a matrix multiplication by vectorizing the input information and matrixing the convolutional kernel, the chain of kernels based on which upper-mentioned convolutions are performed sequentially can be compressed into a single kernel by a matrix-multiplication of first and second point-wise convolution kernels and the original convolution kernel.

Typically, the head portion 3 comprises multiple layers. The proposed second expansion strategy can be applied to all layers or only some layers of the head portion 3. The expansion rate r of the layers can be equal or different. According to an embodiment, suitable expansion rates r of the layers can be determined based on an optimization algorithm, preferably an architecture search algorithm.

First and second expansion strategy are orthogonal to each other. Therefore, in order to further enhance the training procedure, the first and second expansion strategy may be applied simultaneously, i.e. in the head portion 3, one or more layers may be expanded using distributive and associative property of matrix multiplication.

It should be noted that the description and drawings merely illustrate the principles of the proposed invention. Those skilled in the art will be able to implement various arrangements that, although not explicitly described or shown herein, embody the principles of the invention.

**List of reference numerals**

1     neural network
2     backbone portion
3     head portion

**Claims**

1. Method for training an artificial neural network (1), the method comprising the steps of:

    - Providing a neural network (1) with a backbone portion (2) and a head portion (3);

- Performing a first expansion strategy by expanding at least one layer of the backbone portion (2) and/or the head portion (2) by applying the input information provided to the respective layer to multiple filter kernels in order to transform the input information based on said multiple filter kernels, thereby obtaining a plurality of output information and summing said plurality of output information in order to obtain a final output information of the layer, wherein after training a trained neural network (1) is provided in which the at least one layer which has been expanded during training is contracted and operated based on a summation kernel which is obtained by summing up said multiple filter kernels used during the training;

Or

- Providing a neural network (1) with a pretrained backbone portion (2) and an untrained head portion (3);
- Performing a second expansion strategy by keeping the pretrained backbone portion (2) unexpanded and expanding at least one layer of the head portion (3) by replacing a filter kernel of the at least one layer by a set of multiple kernels wherein the set of multiple kernels comprises a first pointwise convolution kernel, a filter kernel and a second pointwise convolution kernel, wherein the number of channels of the at least one layer of the head portion (3) is linearly expanded by the first pointwise convolution and the number of channels of the at least one layer is reduced by the second pointwise convolution, wherein after training a trained neural network (1) is provided in which the at least one layer which has been expanded during training is contracted and operated based on a final filter kernel which is obtained by multiplying the first pointwise convolution kernel, the filter kernel and the second pointwise convolution kernel.

2. Method according to claim 1, wherein in the first expansion strategy, all layers in the backbone portion (2) and all layers in the head portion (3) are expanded.

3. Method according to claim 1 or 2, wherein in the first expansion strategy, all filter kernels used in the respective layer have the same size and the same structure.

4. Method according to anyone of the preceding claims, wherein in the first expansion strategy, the transformation of input information based on said multiple filter kernels is obtained by a convolutional operation and the multiple convolutions to be processed in the at least one layer are performed based on grouped convolution operation provided by the training framework.

5. Method according to claim 1, wherein in the second expansion strategy, all layers of the head portion (3) are expanded by the same ratio, thereby increasing the number of channels in the respective layers of the head portion (3) by the same factor.

6. Method according to claim 1, wherein in the second expansion strategy, the layers of the head portion (3) are expanded by different ratios thereby increasing the number of channels in the respective layers of the head portion by different factors.

7. Method according to claim 6, wherein the expansion ratio of the respective layers of the head portion are pre-calculated by an optimization routine.

8. Method according to claim 1, wherein only the last layer of the head portion (3) is expanded.

Fig. 1

| | |
|---|---|
| Provide untrained neural network comprising a backbone portion and a head portion | S10 |
| Optionally, load pretrained weights for backbone portion | S11 |
| Expand layers by creating linear ensembles | S12 |
| Perform training of neural network | S13 |
| Contract the layers of trained neural network | S14 |

Fig. 2

Fig. 3

Fig. 4

| Provide untrained neural network comprising a backbone portion and a head portion | S20 |

| Load pretrained weights for backbone portion | S21 |

| Expand one or more layers of the head portion by replacing the layer by a series of layers | S22 |

| Perform training of expanded neural network | S23 |

| Contract the expanded layers of trained neural network | S24 |

Fig. 5

Input — Backbone — Head — Output

Fig. 6

Fig. 7

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QI LU ET AL: "Multi-Scale Aligned Distillation for Low-Resolution Detection", 2021 IEEE/CVF CONFERENCE ON COMPUTER VISION AND PATTERN RECOGNITION (CVPR), IEEE, 20 June 2021 (2021-06-20), pages 14438-14448, XP034010781, DOI: 10.1109/CVPR46437.2021.01421 [retrieved on 2021-10-15] * abstract * * Sections 3, 4; figures 2,3 * | 1-4,8 | INV. G06N3/04 G06N3/08 |
| X | US 2019/147318 A1 (HOWARD ANDREW GERALD [US] ET AL) 16 May 2019 (2019-05-16) * abstract * * paragraph [0008] - paragraph [0017] * * paragraph [0073] - paragraph [0133]; figures 2-5; tables 4-7 * | 1,5-8 | |
| A | BOYU YANG ET AL: "Learnable Expansion-and-Compression Network for Few-shot Class-Incremental Learning", ARXIV.ORG, CORNELL UNIVERSITY LIBRARY, 201 OLIN LIBRARY CORNELL UNIVERSITY ITHACA, NY 14853, 6 April 2021 (2021-04-06), XP081932814, * abstract * * Sections 1, 3, 4; figures 1-4 * | 1-8 | TECHNICAL FIELDS SEARCHED (IPC) G06N |

The present search report has been drawn up for all claims

| Place of search | Date of completion of the search | Examiner |
|---|---|---|
| The Hague | 9 February 2022 | Malatesta, Lori |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 2100

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2022

| Patent document cited in search report | | Publication date | Patent family member(s) | | Publication date |
|---|---|---|---|---|---|
| US 2019147318 A1 | | 16-05-2019 | CN | 111213160 A | 29-05-2020 |
| | | | CN | 113657578 A | 16-11-2021 |
| | | | EP | 3646251 A1 | 06-05-2020 |
| | | | EP | 3933707 A1 | 05-01-2022 |
| | | | US | 2019147318 A1 | 16-05-2019 |
| | | | US | 2021350206 A1 | 11-11-2021 |
| | | | WO | 2019099074 A1 | 23-05-2019 |

EPO FORM P0459

For more details about this annex : see Official Journal of the European Patent Office, No. 12/82